# EUROPEAN PATENT APPLICATION

(11) **EP 2 495 744 A1**
(43) Date of publication of application: **05.09.2012**
(21) Application number: 11755825.4
(22) Date of filing: 02.03.2011
(51) Int. Cl.: H01G 9/10, H01M 2/08

(54) **CAPACITOR**

(30) Priority: 16.03.2010 JP 2010059053
(71) Applicant: Panasonic Corporation, Kadoma-shi Osaka 571-8501 (JP)
(72) Inventor: TAKAHARA, Norihisa, Osaka-shi, Osaka 540-6207 (JP); SHIMAMOTO, Hideki, Osaka-shi, Osaka 540-6207 (JP); HIROTA, Kiyoshi, Osaka-shi, Osaka 540-6207 (JP); TSUBAKI, Yuichiro, Osaka-shi, Osaka 540-6207 (JP)
(74) Representative: Vigand, Philippe
(86) International application number: PCT/JP2011/001201
(87) International publication number: WO 2011/114632

(57) **Abstract**

A capacitor includes: a capacitor element; an electrolyte impregnated into at least the capacitor element; a bottomed cylindrical metal case accommodating the capacitor element and the electrolyte; and a sealing body sealing an opening portion of the case. Further, the capacitor also includes a coating layer provided at a portion in contact with the outer surface of the sealing body and formed by dispersing, into resin, an adsorbent adsorbing a solvent included in the electrolyte. Alternatively, the sealing body is formed by dispersing the above-described adsorbent in a rubber component.

## Description

### TECHNICAL FIELD

The present invention relates to capacitors that are used in various types of electronic equipment, electrical equipment, industrial equipment, and automotive equipment, in particular, to capacitors using an electrolyte.

### BACKGROUND ART

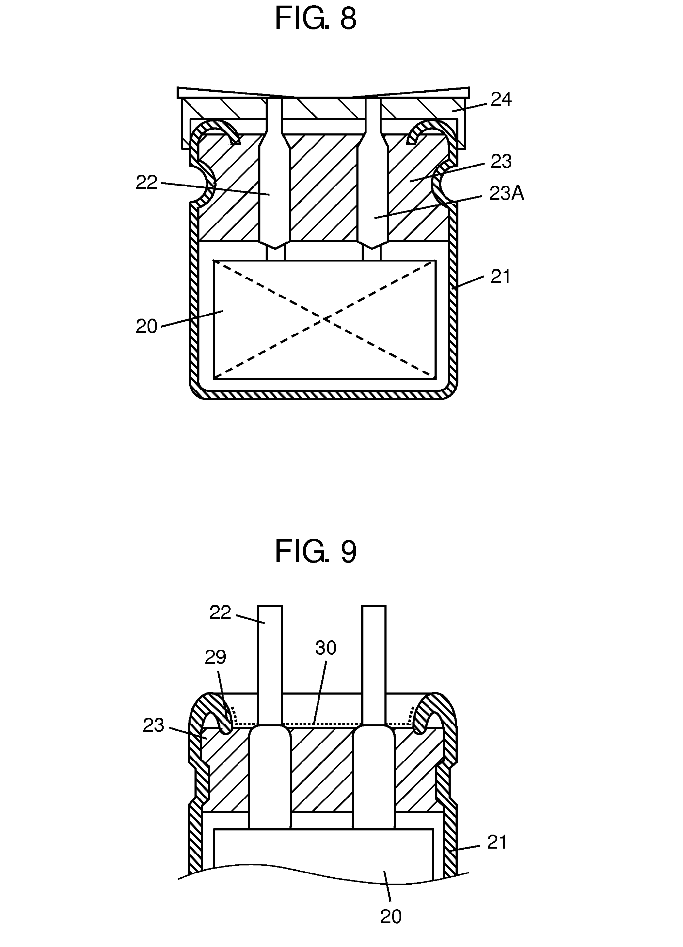

Fig. 8 is a cross-sectional view showing a configuration of an aluminum electrolytic condenser as an example of a conventional capacitor using an electrolyte solution. The condenser includes capacitor element 20, an electrolyte (not shown) which is impregnated into capacitor element 20, and metal case 21 in which these are accommodated. A pair of lead wires 22 is drawn out from capacitor element 20. Lead wires 22 pass through through hole 23A of sealing body 23 provided in the opening of case 21 and are drawn out to the outside. Sealing body 23 is pressed by the drawing process in the vicinity of the opening portion of case 21 and the curling process of the opening end portion, whereby the opening portion of case 21 is sealed.

Insulating plate 24 is provided at a side of an end of the opening of case 21. Lead wires 22 drawn out to the outside through sealing body 23 are inserted into the through hole provided in insulating plate 24, and bent along insulating plate 24. In this manner, the condenser may be surface-mounted on a printed circuit board.

In order to improve the mounting on the printed circuit board, sealing body 23 is formed of vulcanized butyl rubber peroxide. The Young's modulus of the vulcanized butyl rubber peroxide is 4 N/mm² or more at a temperature (250 °C) of a soldering temperature (230 °C) or more. Thus, even though the solder reflow conditions are increasingly hot at the time of mounting on the printed circuit board, sealing body 23 no longer expands (Patent Literature 1).

Fig. 9 is a cross-sectional view showing a configuration of another conventional aluminum electrolytic condenser. In this condenser, capacitor element 20 impregnated with electrolyte is accommodated in case 21 formed of aluminum. Then, lead wires 22 derived from capacitor element 20 pass through a through hole provided in sealing body 23 made of butyl rubber and are drawn out to the outside. Sealing body 23 is placed in the opening portion of case 21, and is pressed by the drawing process. The sealing structure is configured in this manner.

Polyimide layer 30 is formed at the end surface (including the upper surface of sealing body 23 and curling processing unit 29) of the condenser main body of the aluminum electrolytic condenser. Polyimide layer 30 is formed by applying, in a dropwise manner using a dispenser, an N-methyl-2-pyrrolidone solution (non-photosensitive) of polyamide acid 20 wt%, which is a polyimide precursor solution, and drying for 1 hour at 125 °C.

By forming polyimide layer 30 at an end surface of the condenser main body in this manner, thermal oxidation from the surface of sealing body 23 is suppressed. Therefore, it is possible for sealing body 23 to withstand temperatures of 150 °C or more for long periods of time, and reduction of the electrolyte is greatly suppressed. As a result, it is possible to suppress deterioration of the electrical characteristics of the condenser (Patent Literature 2).

However, when the above-described related aluminum electrolytic condenser is used in a high temperature environment, a solvent component included in the electrolyte is vaporized, and the vaporized solvent component is diffused to permeate sealing body 23 and escape to the outside. Therefore, the functions of the electrolyte can no longer be performed and the characteristics of the condenser deteriorate. Hereinafter, this issue will be referred to as "dry up".

In order to reduce dry up, butyl rubber having a low solvent gas permeability is used as the material of sealing body 23. However, even when using butyl rubber as sealing body 23, the solvent gas generated in case 21 permeates sealing body 23 and escapes to the outside (into the atmosphere) at a certain ratio. Therefore, when used in a high temperature environment for a long period of time, it is not possible to avoid the occurrence of dry up.

### Citation List

### Patent Literature

PTL 1 Japanese Patent Unexamined Publication No. 9-275045
PTL 2 Japanese Patent Unexamined Publication No. 2009-88277

### SUMMARY OF THE INVENTION

The present invention is a capacitor which suppresses dry up by suppressing solvent gas permeation of the sealing body, and which exhibits a stable performance.

The capacitor of the present invention includes: a capacitor element; an electrolyte which impregnated at least into the capacitor element; a bottomed cylindrical metal case accommodating the capacitor element and the electrolyte; and a sealing body sealing an opening portion of the case. Further, the capacitor also includes a coating layer provided at a portion in contact with the outer surface of the sealing body and formed by dispersing an adsorbent in resin, which adsorbent adsorbing a solvent included in the electrolyte. Alternatively, the sealing body is formed by dispersing the above-described adsorbent in a rubber component.

Dry up is thought to occur because the solvent gas permeates from the side of the case interior where the concentration is high to the side of the exterior where the concentration is low due to the fact that there is a difference in the concentration of the solvent gas between the case interior side and the exterior side of the sealing body in contact with the atmosphere. In contrast, in the capacitor according to the present invention, an adsorbent adsorbing the solvent gas is dispersed in the coating layer or the sealing body itself. According to either configuration, the coating layer or the sealing body adsorbs the solvent gas generated in the case interior. Therefore, the difference in the concentration of the solvent gas in the metal case interior side and the exterior side of the sealing body becomes small, the solvent gas permeation of the sealing body is thereby suppressed, and it is possible to suppress dry up.

### BRIEF DESCRIPTION OF DRAWINGS

Fig. 1 is a cross-sectional view showing the configuration of the capacitor according to embodiment 1 of the invention.
Fig. 2 is a schematic enlarged cross-sectional view of a coating layer provided on the capacitor shown in Fig. 1.
Fig. 3 is a characteristic diagram showing the remaining percentage by weight of the electrolyte according to the capacitor shown in Fig. 1 in comparison with comparative examples.
Fig. 4 is a cross-sectional view showing the configuration of the capacitor according to embodiment 2 of the invention.
Fig. 5 is a schematic cross-sectional view of the sealing body used in the capacitor shown in Fig. 4.
Fig. 6 is a schematic cross-sectional view of another sealing body used in the capacitor shown in Fig. 4.
Fig. 7 is a characteristic diagram showing the remaining percentages by weight of the electrolyte according to the capacitor shown in Fig. 4 in comparison with a comparative example.
Fig. 8 is a cross-sectional view showing a configuration of a conventional aluminum electrolytic condenser.
Fig. 9 is a cross-sectional view showing a configuration of another conventional aluminum electrolytic condenser.

### DESCRIPTION OF EMBODIMENTS

Hereinafter, embodiments of the present invention will be described with reference to the drawings. In addition, where the configuration of embodiment 2 is the same as that of embodiment 1, the same reference numerals will be applied in the description and a detailed description thereof may be omitted. Further, the present invention is not limited by the respective embodiments.

### FIRST EXEMPLARY EMBODIMENT

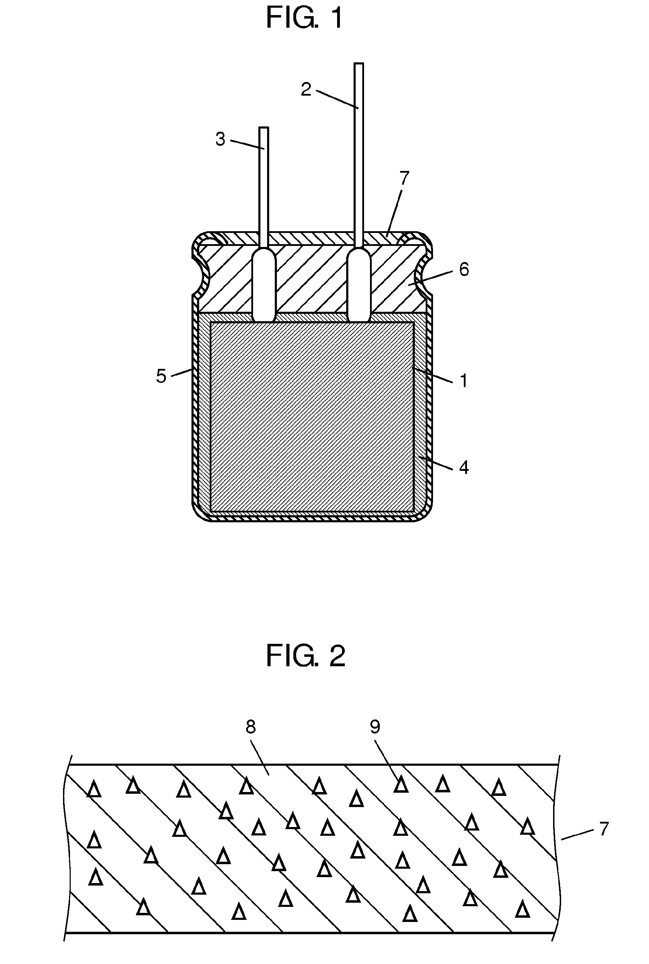

Fig. 1 is a cross-sectional view showing the configuration of the capacitor according to embodiment 1 of the invention, and Fig. 2 is a schematic enlarged cross-sectional view of a coating layer provided on the capacitor. The capacitor includes: capacitor element 1, electrolyte 4 impregnated into at least capacitor element 1; bottomed cylindrical metal case 5; sealing body 6; and coating layer 7.

Capacitor element 1 is configured by winding an anode foil and cathode foil (not shown) through a separator made of cellulose. The anode foil is produced by forming a dielectric oxide film by an anodic oxidation process after carrying out an etching process on aluminum foil and roughening the surface thereof. The cathode foil is produced by carrying out an etching process on aluminum foil and roughening the surface thereof. Anode lead wire 2 is connected to the anode foil and cathode lead wire 3 is connected to the cathode foil. Anode lead wire 2 and cathode lead wire 3 are drawn out from capacitor element 1.

Capacitor element 1 configured in this manner is accommodated in cylindrical bottomed metal case 5 made of aluminum after being impregnated with electrolyte 4.

Sealing body 6 seals the opening portion of case 5. Holes into which anode lead wire 2 and cathode lead wire 3 are inserted are formed in sealing body 6. After arranging sealing body 6 in the opening portion of case 5, a process of drawing the outer circumference of case 5 to the inner side is performed and case 5 is sealed by performing a curling process on the opening edge of case 5. Sealing body 6 may have a configuration of butyl rubber, ethylene propylene (EPT) rubber, fluorine rubber, silicone rubber, nitrile rubber, or the like; however, it is not particularly limited as long as the insulating material can seal case 5 by being compressed.

Coating layer 7 is provided in a portion in contact with the outer surface of sealing body 6. Coating layer 7 is formed by dispersing adsorbent 9 adsorbing a solvent included in electrolyte 4 in resin 8. In this configuration, the solvent gas generated inside case 5 and permeating sealing body 6 is adsorbed by adsorbent 9 mixed in coating layer 7 and the concentration of the solvent gas of coating layer 7 becomes high. Therefore, the difference in the solvent gas concentrations in the inside and outside of case 5 of sealing body 6 becomes small. That is, the solvent gas concentration gradient in the inside and outside of case 5 of sealing body 6 becomes smooth. In this manner, it is possible to suppress the permeation of the solvent gas into sealing body 6.

As adsorbent 9, activated carbon, a molecular sieve (a kind of crystalline zeolite among zeolites), zeolite (a generic term for aluminosilicate with fine pores in the crystal), silica gel, and the like, or any material having solvent gas adsorbability may be used.

The BET specific surface area of adsorbent 9 is 500 m²/g or more and 3000 m²/g or less, and the average pore diameter is 0.5 nm or more and 20 nm or less, more preferably, the specific surface area of adsorbent 9 is 1000 m²/g or more and 3000 m²/g or less, and the average pore diameter is 0.5 nm or more and 5 nm or less. Further, the characteristics of adsorbent 9 such as the material, specific surface area, and average pore diameter are preferably appropriately selected according to the solvent used in electrolyte 4.

As resin 8 configuring coating layer 7, epoxy resin, fluorine resin, acrylic resin, polyimide resin, silicone resin, phenol resin, melamine resin, urethane resin, unsaturated polyester resins, and the like may be used. Besides these, as long as the material is capable of dispersing adsorbent 9 and forming coating layer 7, any material may be used. In addition, in coating layer 7, in addition to adsorbent 9, an inorganic filler or an organic filler may be dispersed as a filler.

When the mixing ratio of adsorbent 9 becomes small, the effect is weakened, conversely, when the mixing ratio is large, the mixing with resin 8 becomes difficult. Therefore, the mixing ratio of adsorbent 9 is preferably in a range of 10 parts by weight or more and 80 parts by weight or less with respect to 100 parts by weight of resin 8. Alternatively, the mixing ratio of adsorbent 9 is preferably in the range of 6% by volume or more and 33% by volume or less of coating layer 7.

Next, the effects of the embodiment will be described using specific examples. When electrolyte 4 includes γ-butyrolactone as a main solvent, epoxy resin may be applied as resin 8, and activated carbon may be applied as adsorbent 9. A ratio of 30 parts by weight of activated carbon to 100 parts by weight of epoxy resin is set. At this time, the mixing ratio of activated carbon in coating layer 7 is 15% by volume. Coating layer 7 is formed by curing after the liquid in which the activated carbon is dispersed in the epoxy resin at this ratio is coated on the portion in contact with the outer surface of sealing body 6. The thickness of coating layer 7 is approximately 200 **µ**m. The specific surface area of the activated carbon is 2300 m²/g, the average pore diameter is 2 nm, and the average particle diameter is 3 **µ**m. The composition of electrolyte solution 4 is 75 parts by weight of γ-butyrolactone, 25 parts by weight of 1,2,3,4 tetra methylimidazolium phthalate, 0.5 parts by weight of nitrobenzoic acid, and 0.5 parts by weight of orthophosphate. The diameter of case 5 is 10 mm, and the height is 9.5 mm. Sealing body 6 is butyl rubber with a thickness of about 2.7 mm. The capacitor configured in this manner is set as sample E1.

For comparison with sample E1, sample C1 was prepared in the same manner as sample E1 except that coating layer 7 was not provided on the portion in contact with the outer surface of the sealing body. Further, sample C2 was prepared in the same manner as sample E1 except that an epoxy resin layer not including activated carbon was formed instead of coating layer 7.

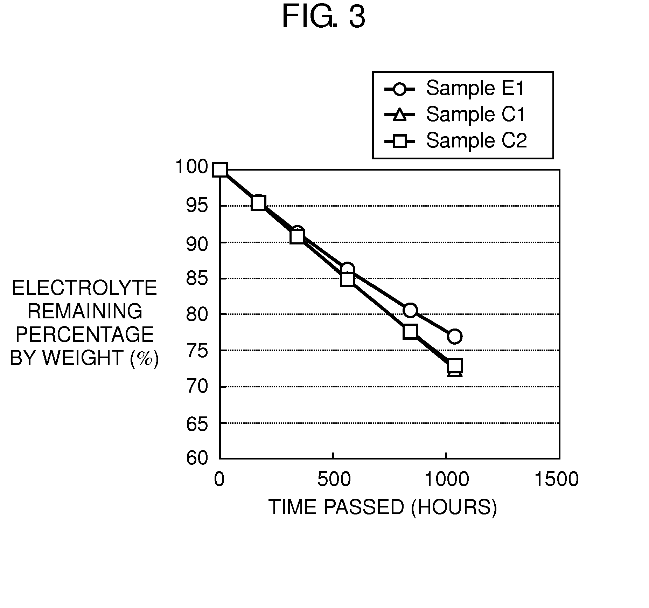

Samples E1, C1, and C2 prepared in this manner were put in a high temperature tank at 135 °C, the decreased state of electrolyte 4 over time was measured and the results are shown in Fig. 3. Fig. 3 is a characteristic diagram showing the remaining percentage by weight of electrolyte 4 over time.

As is clear from Fig. 3, in sample C1 and sample C2, the weight of electrolyte 4 is reduced over time. After 1000 hours, there was a reduction of about 28% and the remaining weight was about 72%. This is because electrolyte 4 is reduced due to the γ-butyrolactone in gasified electrolyte 4 permeating sealing body 6 and escaping to the outside. On the other hand, in sample E1, the weight of electrolyte 4 was reduced by about 23% and the remaining amount stayed at about 77%, whereby it can be understood that there is an effect of suppressing a reduction of electrolyte 4. Furthermore, when only a short time passes, there is almost no difference between the weight reduction rates. This is considered to be because a certain time is needed until the activated carbon, which is adsorbent 9, adsorbs the solvent gas and the solvent gas concentration in coating layer 7 becomes high.

### SECOND EXEMPLARY EMBODIMENT

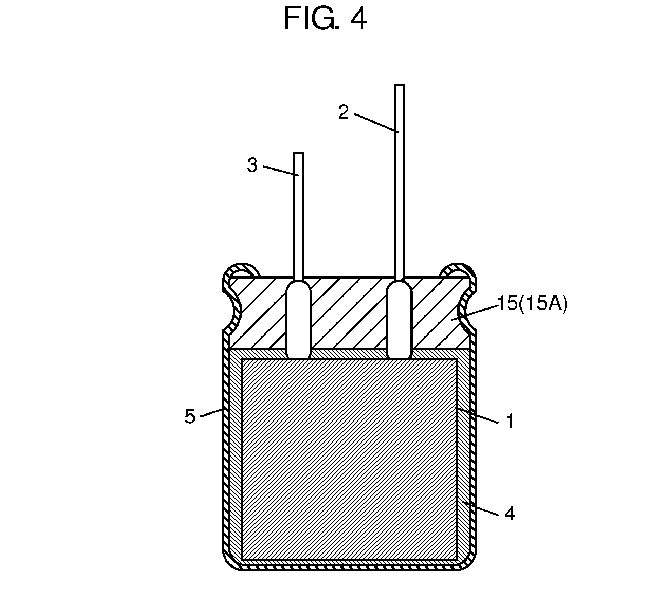

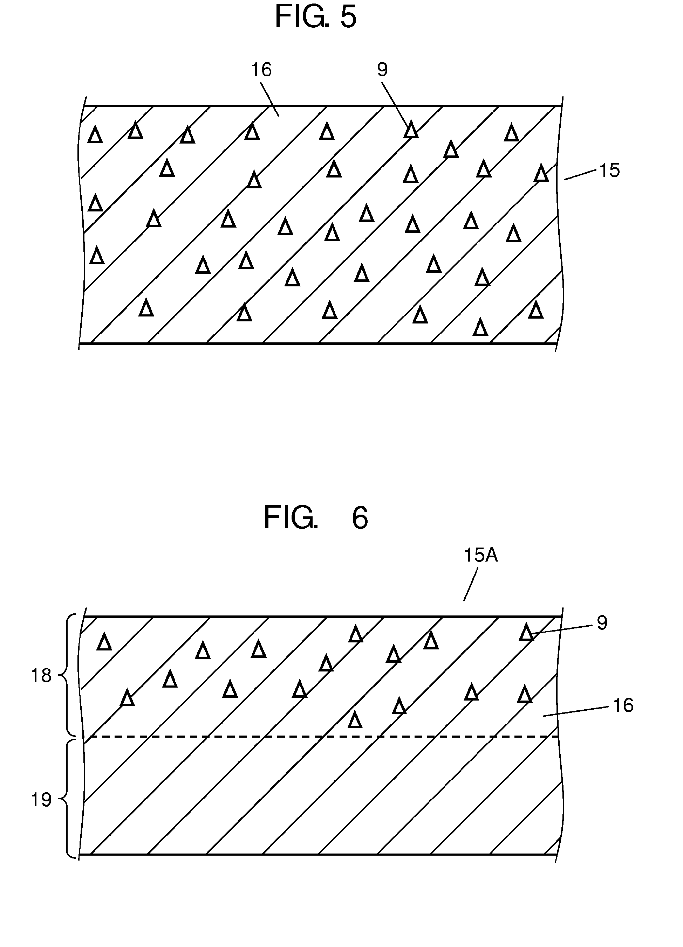

Fig. 4 is a cross-sectional view showing the configuration of the capacitor according to embodiment 2 of the invention and Fig. 5 is a schematic cross-sectional view of the sealing body used in the capacitor. The point of difference between the capacitor in this embodiment and the capacitor of embodiment 1 is that the capacitor has sealing body 15 instead of sealing body 6 and coating layer 7. Since this embodiment is the same as embodiment 1 in other respects, detailed description thereof will be omitted.

Sealing body 15 is formed by dispersing adsorbent 9, which adsorbs the solvent included in electrolyte 4 which impregnated into capacitor element 1, in rubber component 16. This configuration exhibits effects similar to those of the embodiment 1. That is, the solvent gas generated inside case 5 and permeating the inside of sealing body 15 is adsorbed by adsorbent 9 dispersed in sealing body 15, whereby the solvent gas adsorption concentration of the sealing body 15 becomes high. Therefore, the difference in the solvent gas concentrations in the interior and exterior of case 5 of sealing body 15 becomes small. In this manner, it is possible to suppress the solvent gas permeate sealing body 15.

As adsorbent 9, as in embodiment 1, activated carbon, molecular sieves, zeolites, silica gel, and the like, or any material having solvent gas adsorbability may be used.

As rubber component 16 configuring sealing body 15, butyl rubber, ethylene propylene (EPT) rubber, fluorine rubber, silicone rubber, nitrile rubber, acrylic rubber or the like may be used. Other than these, as long as the material is capable of dispersing adsorbent 9 and the insulating material can seal case 5 by being compressed, there is no particular limitation. Furthermore, in rubber component 16, in addition to adsorbent 9, fillers such as inorganic fillers, organic fillers, and the like, or reinforcing materials such as carbon black, silica, and the like may be dispersed.

When the mixing ratio of adsorbent 9 becomes small, the effect is weakened, conversely, when the mixing ratio of adsorbent 9 becomes large, the mixing of rubber component 16 becomes difficult. In addition, as the mixing ratio of adsorbent 9 becomes great, the modulus of elasticity as sealing body 15 is deteriorated and the sealing function is deteriorated. Therefore, the mixing ratio of adsorbent 9 is preferably in a range of 10 parts by weight or more and 80 parts by weight or less with respect to 100 parts by weight of the butyl polymer in rubber component 16. Alternatively, the mixing ratio of adsorbent 9 is preferably in a range of 8% by volume or more and 40% by volume or less of rubber component 16.

If the average particle diameter of adsorbent 9 is too large, it becomes difficult to apply compressive stress evenly to sealing body 15 at the time of sealing, and the reliability of the sealing is deteriorated. On the other hand, if the average particle diameter of adsorbent 9 is too small, dispersal defects are generated at the time of the rubber mixing. Therefore, the average particle diameter of adsorbent 9 is preferably 1 **µ**m or more and 100 **µ**m or less.

Sealing body 15A shown in Fig. 6 may be used instead of sealing body 15. Sealing body 15A is configured of first layer 18 formed by rubber component 16 including adsorbent 9, and second layer 19 formed by rubber component 16 not including adsorbent 9. Sealing body 15A is arranged so that first layer 18 becomes the upper side in Fig. 4.

When the solvent gas concentration of second layer 19 near the solvent becomes high, the solvent gas moves toward first layer 18 and permeates to the outside. However, since first layer 18 includes adsorbent 9, the solvent gas is adsorbed in first layer 18. Therefore, the solvent gas concentration increases in first layer 18. Accordingly, it is possible to reduce the difference between the solvent gas concentration of second layer 19 near the solvent and the solvent gas concentration of first layer 18 apart from the solvent. Therefore, even if adsorbent 9 was only included in first layer 18, it is possible to deteriorate the permeation of the solvent gas with good efficiency.

When adsorbent 9 is dispersed throughout sealing body 15 as shown in Fig. 5, the modulus of elasticity may be deteriorated by condition of the rubber mixing. When the modulus of elasticity is deteriorated, the reliability of the sealing is deteriorated. However, as shown in Fig. 6, by using sealing body 15A configured by first layer 18 and second layer 19, it becomes possible to perform rubber mixing to raise the modulus of elasticity of second layer 19 not including adsorbent 9. As a result, the sealing reliability in sealing body 15A is improved.

Adsorbent 9 may also be dispersed in second layer 19. In that case, adsorbent 9 may be dispersed to a greater degree in first layer 18 than in second layer 19. In this manner, sealing body 15A includes first layer 18 facing the outside of the capacitor and second layer 19 facing the inside of case 5, and adsorbent 9 is dispersed to a greater degree in first layer 18 than in second layer 19.

It is possible for adsorbent 9 to be mixed and the sealing body formed so that the content of adsorbent 9 is increased from the side facing the inside of case 5 toward the side facing the outer surface of the capacitor.

Next, the effects of the embodiments will be described using specific examples. When electrolyte 4 includes γ-butyrolactone as a main solvent, butyl rubber may be applied as rubber component 16, and activated carbon may be applied as adsorbent 9. A ratio of 30 parts by weight of activated carbon to 100 parts by weight of butyl polymer is set. At this time, the ratio of activated carbon in rubber component 16 is 15% by volume. Sealing body 15 is formed by forming a mixture in which the activated carbon is mixed and dispersed in the butyl rubber at this ratio. The thickness of sealing body 15 is approximately 2.7 mm. The specific surface area of the activated carbon is 2300 m²/g, the average pore diameter is 2 nm, and the average particle diameter is 3 **µ**m. The composition of electrolyte solution 4 is 75 parts by weight of γ-butyrolactone, 25 parts by weight of 1,2,3,4 tetra methylimidazolium phthalate, 0.5 parts by weight of nitrobenzoic acid, and 0.5 parts by weight of orthophosphate. The diameter of case 5 is 10 mm, and the height is 9.5 mm. The capacitor configured in this manner is set as sample E2.

Sealing body 15A of the configuration shown in Fig. 6 is prepared in the following manner. A rubber sheet for use as an outer layer before cross-linking in which activated carbon which is adsorbent 9 is mixed and a rubber sheet for use as an inner layer before cross-linking in which activated carbon is not mixed are placed into a metal mold, heated for 10 to 20 minutes at 150 to 200 °C, and bonded. Next, a laminated body of the rubber sheet for use as an outer layer and the rubber sheet for use as an inner layer is taken out from the metal mold, heated for several hours at around 200 °C and integrated. The integrated rubber sheet is formed into a predetermined shape by a pressing process and forms sealing body 15A. Here, in the rubber sheet for use as an outer layer, the same rubber sheet components are used as above-described sealing body 15 and, in the rubber sheet for use as an inner layer, a rubber sheet formed only of butyl rubber is used. Other than using sealing body 15A, sample E3 capacitor is produced in the same manner as sample E2.

Sample E4 is produced in the same manner as sample E2 except that the inside and outside of sealing body 15A of sample E3 are reversed and the sample is used with first layer 18 arranged on the inside and second layer 19 arranged on the outside.

For comparison with samples E2, E3, and E4, sample C3 is produced in the same manner as sample E2 apart from using a sealing body formed only of butyl rubber. That is, sample C3 has the same configuration as sample C1 of embodiment 1.

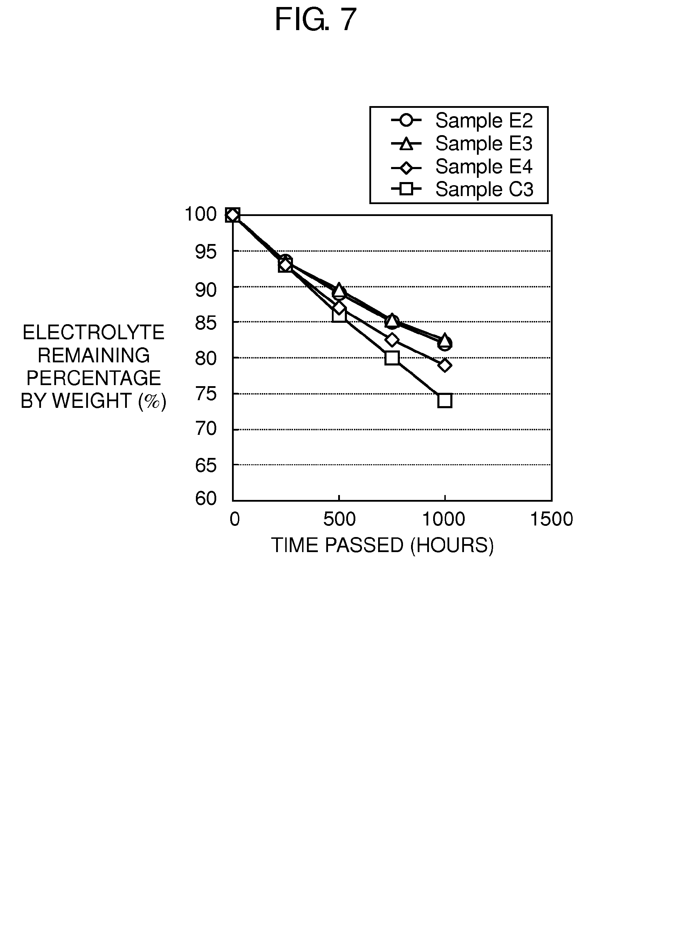

Samples E2, E3, E4 and C3 produced in this manner are put in a high temperature tank at 135 °C, the decreased state of electrolyte 4 over time is measured and the results are shown in Fig. 7. Fig. 7 is a characteristic diagram showing the remaining percentages by weight of electrolyte 4 over time.

As is clear from Fig. 7, in sample C3, the weight of electrolyte 4 is reduced over time. After 1000 hours, there is a reduction of about 26% and the remaining weight was about 74%. This is because electrolyte 4 is reduced due to the γ-butyrolactone in gasified electrolyte 4 permeating sealing body 6 and escaping to the outside. On the other hand, in sample E2, the weight of electrolyte 4 is reduced by about 18% and the remaining amount stayed at about 82%, whereby it can be understood that there is an effect of suppressing a reduction of electrolyte 4.

Even in sample E3 which used sealing body 15A in which activated carbon is mixed only in first layer 18 of the outer side, the weight of electrolyte 4 is reduced by about 18% and the remaining amount stayed at about 82%, whereby it can be understood that there is an effect of suppressing a reduction of electrolyte 4. That is, sample E3 exhibits almost the same remaining percentage by weight of the electrolyte as sample E2 which used sealing body 15 in which activated carbon is dispersed throughout.

As shown in sample E4, when activated carbon is included only in first layer 18 arranged on the inside, the weight reduction rate of the electrolyte is about 21% and the remaining percentage is about 79%. Even in this configuration, the weight reduction rate of the electrolyte is decreased further than sample C3. However, compared to sample E3, the weight reduction rate of the electrolyte is increased. This is considered to be because the difference in the solvent gas concentration between inside first layer 18 and outside second layer 19 becomes great, and the solvent gas gradually permeates to second layer 19 with a low solvent gas concentration and then to the outside of the capacitor.

When only a short time passes, there is almost no difference between the weight reduction rates. This is considered to be because, similarly to embodiment 1, the activated carbon, which is adsorbent 9, adsorbs the solvent gas and a certain time is needed until the solvent gas concentration in sealing body 15 or first layer 18 becomes high.

Coating layer 7 of embodiment 1, and sealing bodies 15 and 15A of embodiment 2 are particularly effective when a γ-butyrolactone and sulfolane solvent for high heat resistance is used as electrolyte 4. However, they may also be used when a general solvent such as water, ethylene glycol, propylene carbonate, ethylene carbonate, or dimethyl carbonate is used.

In the above description, an example of an electrolytic condenser as the capacitor has been described; however, the invention is also applicable to other electrochemical elements using an electrolyte such as electric double layer capacitors or batteries.

### INDUSTRIAL APPLICABILITY

With the capacitor of the present invention, it is possible to suppress dry up by suppressing gas permeation of a sealing body. Therefore, the invention is particularly useful as a capacitor for use in fields that require the use of a capacitor in a high-temperature environment.

### REFERENCE MARKS IN THE DRAWINGS

- 1: CAPACITOR ELEMENT
- 2: ANODE LEAD WIRE
- 3: CATHODE LEAD WIRE
- 4: ELECTROLYTE
- 5: CASE
- 6, 15, 15A: SEALING BODY
- 7: COATING LAYER
- 8: RESIN
- 9: ADSORBENT
- 16: RUBBER COMPONENT
- 18: FIRST LAYER
- 19: SECOND LAYER

## Claims

1. A capacitor comprising:
a capacitor element;
an electrolyte impregnated into the capacitor element;
a bottomed cylindrical metal case accommodating the capacitor element and the electrolyte;
a sealing body sealing an opening portion of the case; and
a coating layer provided at a portion in contact with an outer surface of the sealing body and formed by dispersing, into resin, an adsorbent adsorbing a solvent included in the electrolyte.

2. The capacitor according to Claim 1, wherein the adsorbent is at least any one of activated carbon, zeolite, molecular sieve, and silica gel.

3. The capacitor according to Claim 1, wherein the resin configuring the coating layer is at least any one of epoxy resin, fluorine resin, acrylic resin, polyimide resin, silicone resin, phenol resin, melamine resin, urethane resin, and unsaturated polyester resin.

4. The capacitor according to Claim 1, wherein a ratio of the adsorbent is 10 parts by weight or more and 80 parts by weight or less with respect to 100 parts by weight of the resin configuring the coating layer.

5. A capacitor comprising:
a capacitor element;
an electrolyte impregnated into the capacitor element;
a bottomed cylindrical metal case accommodating the capacitor element and the electrolyte; and
a sealing body sealing an opening portion of the case;
wherein the sealing body is formed by dispersing an adsorbent, which adsorbs a solvent included in the electrolyte, in a rubber component.

6. The capacitor according to Claim 5, wherein the adsorbent is at least any one of activated carbon, zeolite, molecular sieve, and silica gel.

7. The capacitor according to Claim 5, wherein the rubber component forming the sealing body is any of butyl rubber, ethylene propylene rubber, fluorine rubber, silicone rubber, nitrile rubber, or acrylic rubber.

8. The capacitor according to Claim 5, wherein a ratio of the adsorbent is 10 parts by weight or more and 80 parts by weight or less with respect to 100 parts by weight of butyl polymer in the rubber component configuring the sealing body.

9. The capacitor according to Claim 5, wherein the sealing body includes a first layer facing an outer face of the capacitor and a second layer facing an inner face of the case, and the adsorbent is dispersed in a greater amount into the first layer than into the second layer.
